# EUROPEAN PATENT SPECIFICATION

(11) **EP 2 424 007 B1**
(45) Date of publication and mention of the grant of the patent: **07.05.2014**
(21) Application number: 11250448.5
(22) Date of filing: 08.04.2011
(51) Int. Cl.: H01M 2/22, H01M 2/26, H01M 2/30, H01M 10/04, H01M 2/00, H01M 10/02, H01M 2/02

(54) **Rechargeable battery**
Wiederaufladbare Batterie
Batterie rechargeable

(30) Priority: 14.09.2010 KR 20100090063; 31.08.2010 KR 20100084838
(43) Date of publication of application: 29.02.2012
(73) Proprietor: Samsung SDI Co., Ltd., Gyeonggi-do (KR); Robert Bosch GmbH, 70442 Stuttgart (DE)
(72) Inventor: Kim, Sung-Bae, Giheung-gu, Yogin-si Gyeonggi-do (KR); Byun, Sang-won, Giheung-du, Yongin-si Gyeonggi-do (KR); Kim, Joong-Heon, Giheung-du, Yongin-si Gyeonggi-do (KR); Moon, Jong-Seok, Giheung-du, Yongin-si Gyeonggi-do (KR)
(74) Representative: Mounteney, Simon James

(56) References cited:
- EP-A1- 2 204 863
- EP-A1- 2 219 247
- WO-A1-2010/095224
- JP-A- 2006 147 180
- JP-A- 2007 128 746
- US-A1- 2006 008 702
- US-A1- 2008 152 997
- US-A1- 2010 047 686

## Description

### BACKGROUND

### 1. Field

The present invention relates to a rechargeable battery.

### 2. Description of the Related Art

A rechargeable battery differs from a primary battery in that it can be repeatedly charged and discharged, while the latter makes the irreversible conversion of chemical energy to electrical energy. Low-capacity rechargeable batteries are used as the power supply for small electronic devices, such as cellular phones, notebook computers and camcorders, while high-capacity rechargeable batteries are used as the power supply for driving motors in hybrid vehicles and the like.

A high-power rechargeable battery using a non-aqueous electrolyte with a high energy density has been recently developed. For example, the high-power rechargeable battery is constructed with a high-capacity rechargeable battery having a plurality of rechargeable cells coupled to each other in series such that it can be used as the power supply for driving motors in electric vehicles requiring high power. The rechargeable battery may have a cylindrical shape or a prismatic shape.

Due to repeated charging and discharging or external impact, a gas is generated in the rechargeable battery and internal pressure is increased, and thus an electrode assembly wound in a jelly roll shape may be deformed. The deformed electrode assembly does not contact a case of the rechargeable battery due to an insulating member that functions as an insulator between the case and the electrode assembly.

However, when the deformed electrode assembly contacts a corner formed in the insulating member, the electrode assembly may be damaged.

In addition, when the electrode assembly is deformed, a space between an insulating member and the electrode assembly can be decreased such that excessive pressure is applied to the electrode assembly by the assembly.

The above information disclosed in this Background section is only for enhancement of understanding of the background of the described technology and therefore it may contain information that does not form the prior art that is already known in this country to a person of ordinary skill in the art.

Batteries with a quadrangular shape which have an insulating member arranged between the cap plate and the electrode assembly are disclosed in WO2010/095224, US2010/0047686 and EP2204863.

### SUMMARY

The present invention sets out to provide a rechargeable battery having an insulating member that can prevent or substantially prevent an electrode assembly that has been deformed due to an external impact or an increase of internal pressure from being damaged and also provide a space for deformation of the electrode assembly.

The present invention relates to a rechargeable battery having a quadrangular shape comprising:
an electrode assembly;
a case having an opening, and arranged to contain the electrode assembly;
a cap plate arranged to seal the opening of the case;
an electrode terminal electrically connected to the electrode assembly and arranged to protrude outside the case; and
a lower insulating member disposed under the cap plate arranged between the electrode assembly and the cap plate and adjacent the electrode terminal, the lower insulating member comprising an inclined portion facing the electrode assembly, wherein the lower insulating member has a terminal hole into which the electrode terminal is inserted.

The inclined portion of the insulating member may include a rounded inclined side.

The inclined portion of the insulating member may include a flat inclined side.

The insulating member may further include a protruding portion extending from an end thereof.

The protruding portion may extend from a body portion of the insulating member and have a first thickness at a first end adjacent the body portion, the first thickness being less than a thickness of the body portion.

The protruding portion may have a second thickness at a second end opposite the first end, the second thickness being substantially the same as the first thickness.

The protruding portion may have a second thickness at a second end opposite the first end, the second thickness being less than the first thickness.

The insulating member may include a stepped portion at an end thereof, and a space may be formed between the cap plate and the stepped portion.

The rechargeable battery may further include a protecting member surrounding an external side of the electrode assembly corresponding to the insulating member.

The protecting member may include a tape.

The insulating member may include an elastic material.

At least some of the above and other features of the invention are set out in the appended claims.

Thus an embodiment of the present invention enables, a lower insulating member to prevent or substantially prevent an electrode assembly deformed due to an increase of pressure in a case or external impact from being damaged when an insulating member contacts the electrode assembly.

According to an aspect of the invention, there is provided a rechargeable battery as set out in claim 1. Preferred features of this aspect are set out in claims 2 to 14.

### BRIEF DESCRIPTION OF THE DRAWINGS

The above and other features and advantages will become more apparent to those of ordinary skill in the art upon making reference to the following embodiments of the present invention which are described with reference to the attached drawings. Moreover, additional aspects and/or advantages of embodiments of the present invention are set forth in the following description and accompanying drawings, or may be apparent in view thereof to those skilled in the art.

FIG. 1 is a perspective view of a rechargeable battery according to an embodiment of the present invention.

FIG. 2 is a cross-sectional view of the rechargeable battery of FIG. 1, taken along the line II-II.

FIG. 3 is a partial exploded perspective view of the rechargeable battery of FIG. 1.

FIG. 4 is a partial cross-sectional view of the rechargeable battery of FIG. 3, taken along the line IV-IV.

FIG. 5 is a partial cross-sectional view of a rechargeable battery according to another embodiment of the present invention.

FIG. 6 is a partial exploded perspective view of a rechargeable battery according to another embodiment of the present invention.

FIG. 7 is a cross-sectional view of the rechargeable battery of FIG. 6, taken along the line VII-VII.

FIG. 8 is a partial cross-sectional view of a rechargeable battery according to another embodiment of the present invention.

FIG. 9 is a partial cross-sectional view of a rechargeable battery according to another embodiment of the present invention.

FIG. 10 is a partial cross-sectional view of a rechargeable battery according to another embodiment of the present invention.

FIG. 11 is a partial exploded perspective view of a rechargeable battery according to another embodiment of the present invention.

FIG. 12 is a partial cross-sectional view of the rechargeable battery of FIG. 11, taken along the line XII-XII.

### DETAILED DESCRIPTION

The present invention will be described more fully hereinafter with reference to the accompanying drawings, in which some embodiments of the invention are shown. However, embodiments of the present invention may be embodied in different forms and should not be construed as limited to the embodiments illustrated and set forth herein. Rather, these embodiments are provided by way of example for understanding of the invention and to convey the scope of the invention to those skilled in the art. As those skilled in the art would realize, the described embodiments may be modified in various different ways, all without departing from the scope of the present invention. In the specification and drawings, like reference numerals designate like elements.

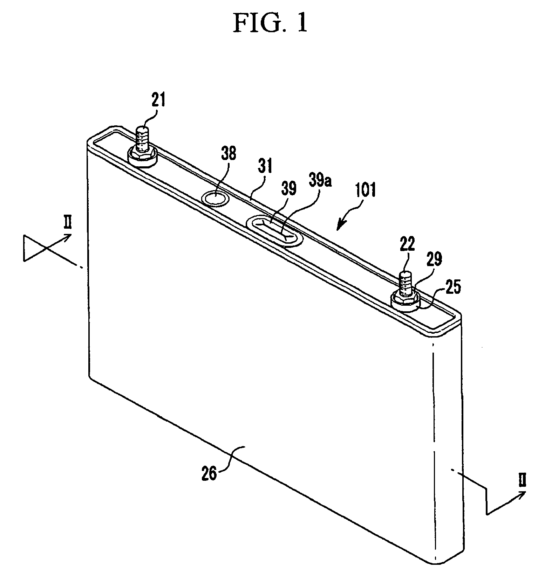

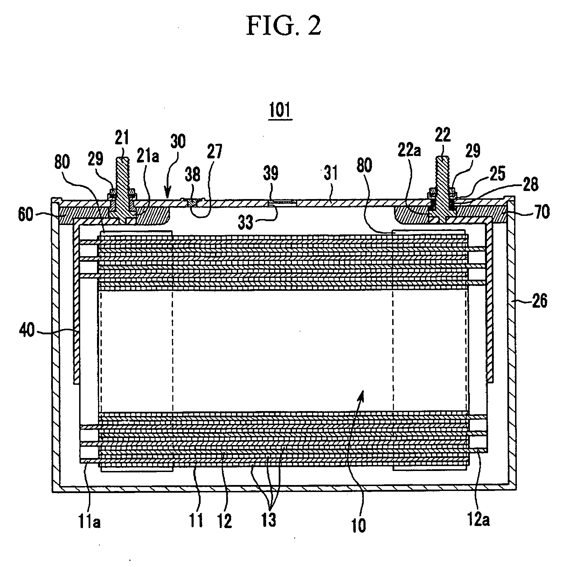

FIG. 1 is a perspective view of a rechargeable battery according to an exemplary embodiment of the present invention, and FIG. 2 is a cross-sectional view of the rechargeable battery of FIG. 1, taken along the line II-II.

Referring to FIG. 1 and FIG. 2, a rechargeable battery 101 according to an embodiment of the present invention includes an electrode assembly 10 spirally wound by interposing a separator 13 between a first electrode 11 and a second electrode 12, a case 26, a cap plate 31 where an emission hole 33 is formed, a vent plate 39 combined to one end of the emission hole 33, and lower insulating members 60 and 70 provided in the case 26.

For purposes of description, the rechargeable battery 101 is described as a lithium ion rechargeable battery having a quadrangular shape. However, without being limited thereto, the present invention is applicable to various other types of batteries, such as a lithium polymer battery, a cylindrical battery, and the like. In addition, the first electrode 11 may be a negative electrode and the second electrode 12 may be a positive electrode, or the first electrode 11 may be a positive electrode and the second electrode 12 may be a negative electrode. However, the first electrode 11 and the second electrode 12 will be described without reference to polarity herein for ease of description.

The electrode assembly 10, is formed in a jelly roll shape by spirally winding the first electrode 11, the second electrode 12, and the separator 13. The first electrode 11 and the second electrode 12 each include a respective current collector formed of a thin metal foil and an active material coated on the surface of the current collector. The first electrode 11 and the second electrode 12 are each divided into respective coated regions where the active material is coated over the current collector and uncoated regions 11a and 12a where the active material is not coated over the current collector. The coated regions form most of the first and second electrodes 11 and 12 in the electrode assembly 10, and the uncoated regions 11 a and 12a are respectively disposed at both sides of the coated region.

However, embodiments of the present invention are not limited thereto, and in another embodiment, for example, the electrode assembly 10 may have a structure in which the first and second electrodes are formed with a plurality of sheets being stacked, interposing a separator therebetween.

The case 26, is formed substantially in the shape of a cuboid, and has an opening at one side thereof. A cap assembly 30 includes the cap plate 31 covering the opening of the case 26, a first electrode terminal 21 protruding to the outside of the cap plate 31 and electrically connected with the first electrode 11, a second electrode terminal 22 protruding to the outside of the cap plate 31 and electrically connected with the second electrode 12, and the vent plate 39 having a notch 39a to be broken depending on a predetermined internal pressure level. In other words, in this embodiment, the first electrode terminal 21 passes through the lower insulating member 60. In other embodiments, the first electrode terminal 21 may pass adjacent the lower insulating member 60.

The cap plate 31 is formed with a thin plate, and combined to the opening of the case 26 to seal the opening. The cap plate 31 blocks the inside of the sealed case 26 from the outside thereof. The cap plate 31 includes an electrolyte solution inlet 27 for injection of an electrolyte solution into the sealed case 26. After injection of the electrolyte solution, the electrolyte solution inlet 27 is sealed by a sealing cap 38.

The first and second electrode terminals 21 and 22 penetrate the cap plate 31, and, therefore, a first gasket 25 disposed in an upper portion of the cap plate 31 and a second gasket 28 disposed in a lower portion of the cap plate 31 insulate the cap plate 31 from the first and second electrode terminals 21 and 22.

The first and second electrode terminals 21 and 22, are each formed in the shape of a circular cylinder, and nuts 29 are provided at upper portions of the first and second electrode terminals 21 and 22 to support them therefrom, and screw threads are formed at the outer circumferences of the first and second electrode terminals 21 and 22 so as to be engaged with the nuts 29. Terminals flanges 21 a and 22a are formed at lower portions of the first and second electrode terminals 21 and 22 to support them therefrom. When the nuts 29 are fastened to the first and second electrode terminals 21 and 22, the terminal flanges 21 a and 22a and the nuts 29 press the first gasket 25 and the second gasket 28 such that first and second electrode terminals 21 and 22 and the cap plate 31 are sealed against each other. However, embodiments of the first and second electrode terminals 21 and 22 are not limited thereto, and in another embodiment, for example, the first and second electrode terminals 21 and 22 may be formed in the shape of a plate type terminal (not shown) combined with the cap plate 31 or a terminal plate through a rivet.

In this embodiment, a protecting member 80 surrounding the external side of a portion of the electrode assembly 10 corresponding to the lower insulating members 60 and 70 surrounds the electrode assembly 10. The protecting member 80 may be a tape that surrounds the electrode assembly 10. In some embodiments, the protection member 80 covers a portion of an outside of the electrode assembly 10 that is adjacent the lower insulating member 60. Thus, the electrode assembly 10 can be prevented or substantially prevented from being broken even though it is deformed due to external impact. Here, the tape of the protecting member 80 may be formed from an insulating material. In other words, in some embodiments of the invention a protecting member 80 (e.g. a tape) can be formed to surround the portion of the electrode assembly 10 adjacent (i.e. at a corresponding position to) one or more of the insulating members 60 and 70.

In some embodiments, the lower insulating member 60 may comprise an insulating material and/or an elastic material.

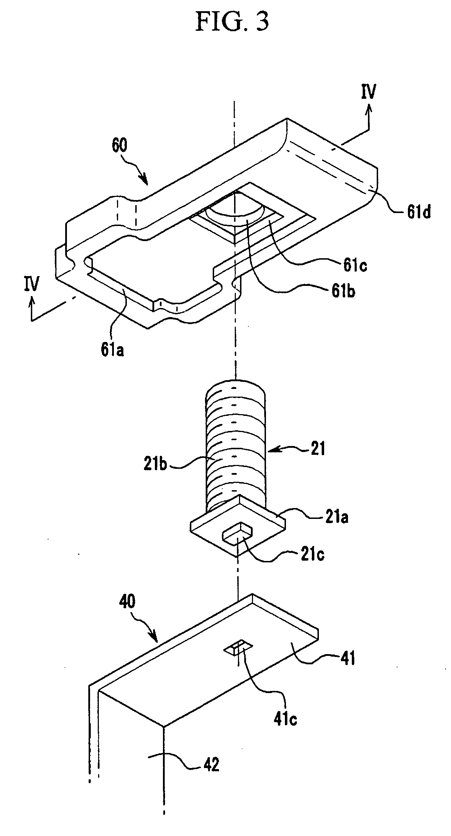

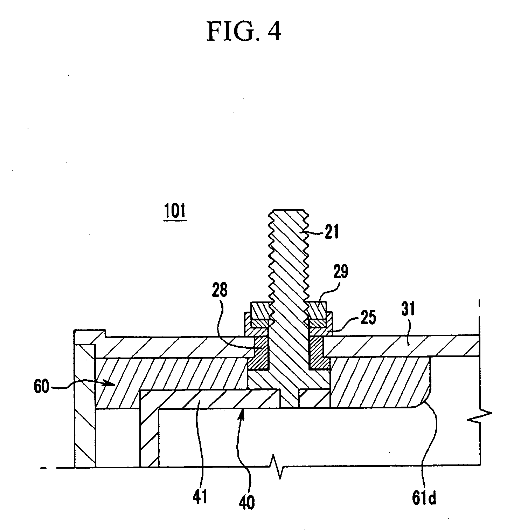

FIG. 3 is a partial exploded perspective view of the rechargeable battery 101, and FIG. 4 is a partial cross-sectional view of the rechargeable battery 101, taken along the line IV-IV of FIG. 3.

Referring to FIG. 3 and FIG. 4, the lower insulating member 60 is provided for insulation between the terminal flange 21 a and the cap plate 31. The terminal flange 21 a and a first electrode current collecting member 40 are inserted into a groove formed in the lower insulating member 60 disposed under the cap plate 31. The lower insulating member 60 functions to insulate the first electrode current collecting member 40 and the first electrode terminal 21 with the cap plate 31, and is inserted between the terminal flange 21 a and the cap plate 31 and then stably fixed. In this embodiment, the lower insulating member 70 (shown in Figure 1) has a corresponding shape as the lower insulating member 60. However, in other embodiments, it will be appreciated that the lower insulating member 70 could have a different shape to the lower insulating member 60.

In addition, in some embodiments, the lower insulating member can extend so that the first electrode terminal 21 and the second electrode terminal 22 both pass therethrough.

As shown in FIG. 3, in this embodiment, the first electrode terminal 21 includes a terminal rod 21 b protruding from the terminal flange 21a and having an external circumferential surface which is threaded, and a support protrusion 21 c protruding toward the bottom of the case 26 from the bottom of the terminal flange 21 a.

In addition, the first electrode current collecting member 40, in this embodiment, includes a terminal joining portion 41 where a support hole 41 c is formed and into which the support protrusion 21c of the first electrode terminal 21 is inserted, and an electrode joining portion 42 bent from the terminal joining portion 41 and attached to the electrode assembly 10, such as by welding.

In addition, the lower insulating member 60 is formed with an insulating material. Thus, a side of the lower insulating member 60 facing a lower side of the cap plate 31 is provided close to the lower side of the cap plate 31 so as to prevent or substantially prevent a current from flowing between the cap plate 31 and the electrode assembly 10. In embodiments of the present invention, the size of the lower insulating member 60 may be varied according to the number of electrode assemblies 10 received in the case 26, and the lower insulating member 60 may include an elastic material that can absorb external impact. It will be appreciated that in some embodiments of the invention, the rechargeable battery may contain more than one electrode assembly 10.

Referring to FIG. 3 and FIG. 4, the lower insulating member 60 is formed in the shape of a thick plate and includes a terminal hole 61 b formed therein (e.g., at the right side thereof, i.e. a side facing inwardly towards a central region of the case), a flange groove 61 c, and a joining groove 61 a formed at a side of the lower insulating member 60 facing the first electrode current collecting member 40.

In this embodiment, the first electrode terminal 21 is inserted in the terminal hole 61 b, the terminal flange 21 a is fixed in the flange groove 61 c, the terminal joining portion 41 of the first electrode current collecting member 40 is inserted into the joining groove 61 a, and the support protrusion 21 c is inserted into the support hole 41c and is attached thereto, such as by welding.

Thus, the lower insulating member 60 insulates the cap plate 31 and the first electrode current collecting member 40 and simultaneously stably fixes the lower insulating member 60 in the case 26.

In this embodiment, the lower insulating member 60 includes an inclined portion facing the electrode assembly 10, such as an inclined side at a lower corner 61d at the right side (inwardly facing side) of the lower insulating member 60 facing the electrode assembly 10. In this embodiment, the inclined side of the corner 61 d may be rounded. The electrode assembly 10 partially contacts the corner 61 d including the rounded inclined side when an experiment (e.g., a drop test) for measuring durability of the rechargeable battery 101 is performed, and the corner 61 d can prevent or substantially prevent the electrode assembly 10 from being damaged. In addition, when the electrode assembly 10 expands due to gas generated from the inside of the electrode assembly 10 that repeatedly performs charging and discharging, the electrode assembly 10 can partially contact the corner 61 d including the rounded inclined side at the lower insulating member 60. As a result, the corner 61d can prevent or substantially prevent the contacting portion of the electrode assembly 10 from being damaged.

In other words, the lower insulating member 60 is an insulating member arranged between the electrode assembly 10 and the cap plate 31 and adjacent the electrode terminal, with the insulating member comprising an inclined portion facing the electrode assembly 10. In the embodiment of FIG. 4, the inclined portion is rounded surface, but in other embodiments it could be inclined in other ways, e.g. a flat surface.

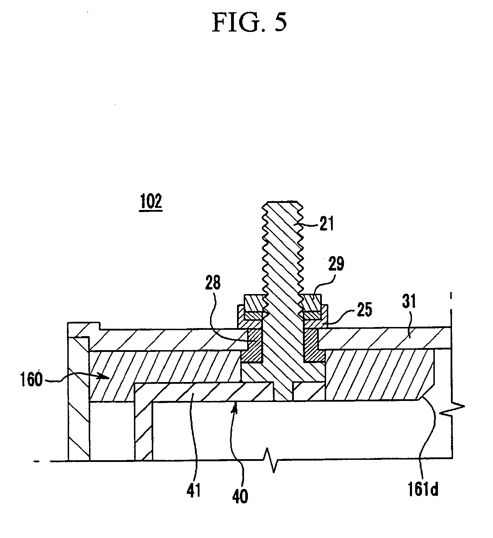

FIG. 5 is a partial cross-sectional view of another embodiment of the present invention that is similar to the embodiment shown in FIGS. 3 and 4.

Referring to FIG. 5, a rechargeable battery 102 according to another embodiment is the same as the rechargeable battery 101 described above, except for the shape of the lower insulating member 160, and therefore a description of the same components and structures will not be repeated. In addition, a size and material of the lower insulating member 160 may be the same as the lower insulating member 60, and therefore no further description will be provided.

As shown in FIG. 5, an inclined side at a lower right side (inwardly facing side) of the lower insulating member 160, facing the electrode assembly 10, is flat. A lower corner 161 d including the flat inclined side can provide a structure that can prevent or substantially prevent the electrode assembly 10 deformed due to internal pressure variation in the rechargeable battery 102 or external impact from being damaged by the lower insulating member 160.

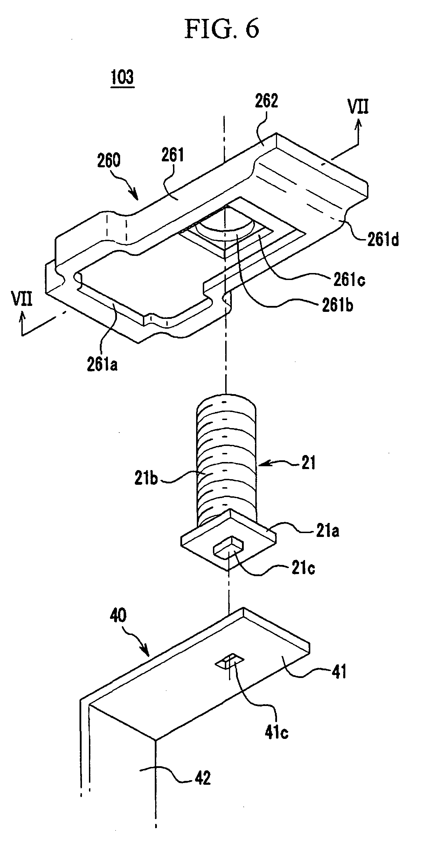

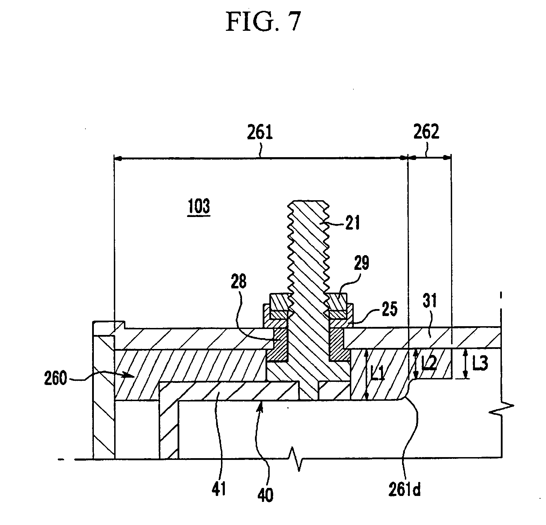

FIG. 6 is a partial exploded perspective view of a rechargeable battery according to another embodiment of the present invention, and FIG. 7 is a partial cross-sectional view taken along the line Vll-Vll of FIG. 6.

Referring to FIG. 6 and FIG. 7, a rechargeable battery 103 according to another embodiment of the present invention is the same as the rechargeable battery 101 described above, except for the shape of the lower insulating member 260, and therefore a description of the same components and structures will not be repeated. In addition, an inclined side of a corner 261 d including a rounded inclined side of the lower insulating member 260 is the same as the inclined side of the corner 61 d including the rounded inclined side in the rechargeable battery 101, and therefore further description of this aspect will not be provided. In addition, the lower insulating member 260 is the same as the lower insulating member 60 of the rechargeable battery 101 in material and size, excluding the thickness, and therefore further description will not be provided.

Referring to FIG. 6, the lower insulating member 260 includes a body portion 261 fixed to the first electrode terminal 21 and a protruding portion 262 extending from a side (e.g., the right side) of the body portion 261.

Here, the body portion 261 of the lower insulating member 260 has a first thickness L1, and the protruding portion 262 has a second thickness L2 at a portion adjacent the body portion 261, or where extension of the protruding portion 262 begins, and a third thickness L3 at a portion where the extension is ended (i.e. an end of the protruding portion 262 opposite the end adjacent the body portion 261). The thicknesses L1, L2, and L3 are measured in a direction perpendicular to the cap plate 31.

In this embodiment, the second thickness L2 and the third thickness L3 in the body portion 262 of the lower insulating member 260 are equal or substantially the same as one another.

In addition, the protruding portion 262 extends to the right side (inwardly facing side) of FIG. 6 from a portion separated from an upper portion of an inclined side of the corner 261 d including a rounded inclined side of the body portion 261.

Thus, the second and third thicknesses L2 and L3 of the protruding portion 262 are thinner than the first thickness L1 of the body portion 261, and therefore a space formed between the protruding portion 262 and the electrode assembly 10 is larger than a space between the body portion 261 and the electrode assembly 10.

When a test (e.g., a drop test) for measuring durability of the rechargeable battery 103 is performed, the space between the protruding portion 262 and the electrode assembly 10 may receive a deformed portion of the electrode assembly 10, not contacting the corner 261 d including the rounded inclined side of the lower insulating member 260. In addition, the space between the protruding portion 262 and the electrode assembly 10 may receive a deformed portion of the electrode assembly 10, not contacting the corner 261 d including the rounded inclined side of the lower insulating member 260 when the electrode assembly 10 repeatedly charging and discharging expands due to an internal gas generated from the electrode assembly 10.

The protruding portion 262 provides an insulating function to block a current flowing between the cap plate 31 and the electrode assembly 10 and simultaneously provides a buffer space for absorbing impact when a portion of the electrode assembly 10 corresponding to the protruding portion 262 is deformed due to external impact.

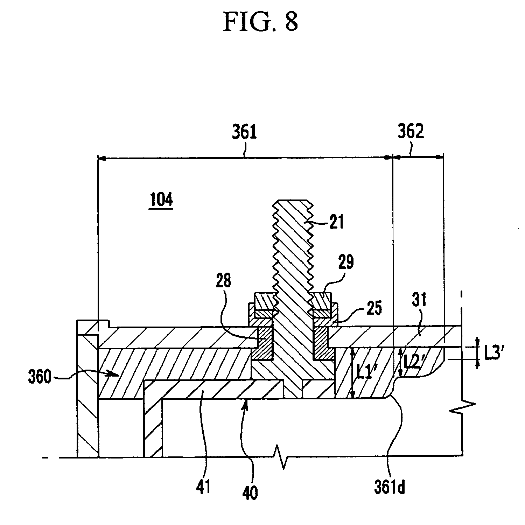

FIG. 8 is a partial cross-sectional view of another embodiment of the present invention.

Referring to FIG. 8, a rechargeable battery 104 according to another embodiment is the same as the rechargeable battery 103 described above, except for the shape of the lower insulating member 360, and therefore a description of the same components and structures will not be repeated. In addition, an inclined side of a corner 361d including a rounded inclined side of the lower insulating member 360 is the same as the inclined side of the corner 261d including the rounded inclined side of the lower insulating member 260 described above, and therefore, further description thereof will not be provided. Further, the lower insulating member 360 is the same as the lower insulating member 260 in material and size, excluding the thickness, and therefore, further description thereof will not be provided.

As shown in FIG. 8, a body portion 361 of the lower insulating member 360 includes a first thickness L1'. In addition, a protruding portion 362 of the lower insulating member 360 has a second thickness L2' at a portion where extension starts from the body portion 361 and a third thickness L3' at a portion where the extension ends. The thicknesses L1', L2', and L3' are measured in a direction perpendicular to the cap plate 31. In this embodiment, the second thickness L2' of the protruding portion 362 is less than the first thickness L1' of the body portion 361.

FIG. 8 illustrates that the protruding portion 362 extends to the right side (inwardly facing side) from a portion separated to an upper portion of the inclined side of the corner 361 d including the rounded inclined side of the body portion 361.

In this embodiment, the second thickness L2' is greater than the third thickness L3', and therefore a space between the protruding portion 362 and the electrode assembly 10 is larger than the space between the protruding portion 262 and the electrode assembly 10 in the rechargeable battery 103.

Thus, compared to the rechargeable battery 103, the space between the protruding portion 362 and the electrode assembly 10 can be larger for providing a buffer space where a portion of the electrode assembly 10 corresponding to the protruding portion 362 is deformed due to external impact, and the impact can be absorbed.

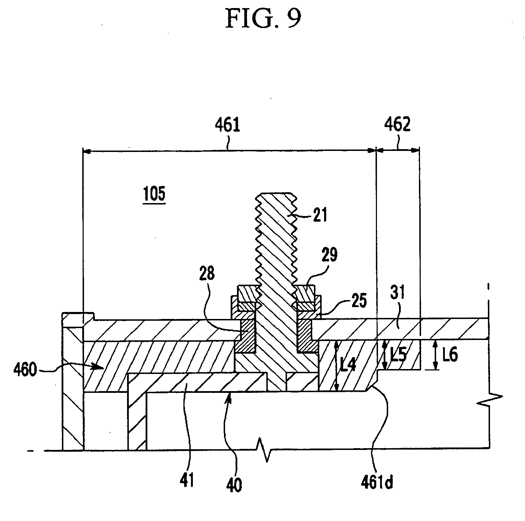

FIG. 9 is a partial cross-sectional view of a rechargeable battery according to another embodiment of the present invention.

Referring to FIG. 9, a rechargeable battery 105 according to another embodiment is the same as the rechargeable battery 103 described above, except for the shape of the lower insulating member 460, and therefore a description of the same components and structures will not be repeated.

Referring to FIG. 9, the lower insulating member 460 includes a body portion 461 fixed to the first electrode terminal 21 and a protruding portion 462 extending from the body portion 461.

The body portion 461 of the lower insulating member 460 has a fourth thickness L4 measured in a direction perpendicular to the cap plate 31. In addition, a lower corner 461 d at the right side (inwardly facing side) of the body portion 461 is flat and inclined. When a test (e.g., a drop test) for measuring durability of the rechargeable battery 105 is performed and a portion of the electrode assembly 10 contacts the corner 461 d, the corner 461 d formed in the lower insulating member 460 can prevent or substantially prevent the portion of the electrode assembly 10 from being damaged. In addition, when the electrode assembly 10 expands due to an internal gas generated from the electrode assembly 10 that repeatedly performs charging and discharging and the electrode assembly 10 partially contacts the lower insulating member 460, the inclined side of the flat inclined corner 461 d can prevent or substantially prevent the contacting portion of the electrode assembly 10 from being damaged.

In FIG. 9, the protruding portion 462 of the lower insulating member 460 extends at the right side (inwardly facing side) of the lower insulating member 460.

The body portion 461 of the lower insulating member 460 has a fourth thickness L4, and the protruding portion 462 has a fifth thickness L5 at a portion where extension starts from the body portion 461 and a sixth thickness L6 at a portion where the extension ends. The thicknesses L5 and L6 are measured in a direction perpendicular to the cap plate 31.

In this embodiment, the fifth thickness L5 of the protruding portion 462 of the lower insulating member 460 may be substantially the same as the sixth thickness L6.

In FIG. 9, the protruding portion 462 is extended to the right side (inwardly facing side) from a portion separated to an upper portion of a flat inclined corner 261d of the body portion 461.

Thus, a space between the protruding portion 462 and the electrode assembly 10 is larger than a space between the body portion 461 and the electrode assembly 10.

When a test (e.g., a drop test) for measuring durability of the rechargeable battery 105 is performed, the space formed between the protruding portion 462 and the electrode assembly 10 may receive a deformed portion of the electrode assembly 10, not contacting an inclined side of the corner 461 d including the flat inclined side of the lower insulating member 460. In addition, the space formed between the protruding portion 462 and the electrode assembly 10 may receive a deformed portion of the electrode assembly 10, not contacting the inclined side of the corner 461 d including the flat inclined side of the lower insulating member 460 when the electrode assembly 10 that repeatedly performs charging and discharging expands due to an internal gas generated from the electrode assembly 10.

The protruding portion 462 provides an insulating function to block a current flowing between the cap plate 31 and the electrode assembly 10 and simultaneously provides a buffer space for absorbing impact when a portion of the electrode assembly 10 corresponding to the protruding portion 462 is deformed due to external impact.

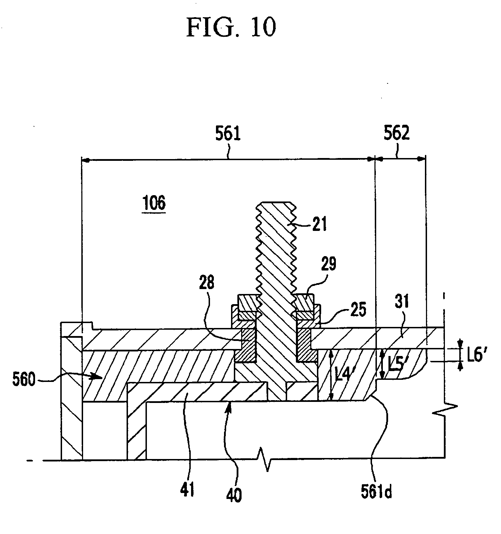

FIG. 10 is a partial cross-sectional view of another embodiment of the present invention.

Referring to FIG. 10, a rechargeable battery 106 according to another embodiment is the same as the rechargeable battery 105 described above, except for the shape of the lower insulating member 560, and therefore a description of the same components and structures will not be repeated.

In addition, an inclined side of a corner 561 d including a flat inclined side of the lower insulating member 560 is the same as the flat inclined corner 461 d of the lower insulating member 460, and therefore further description thereof will not be provided. Further, the lower insulating member 560 may be the same as the lower insulating member 460 in material and size, excluding the thickness, and therefore further description thereof will not be provided.

Referring to FIG. 10, the lower insulating member 560 includes a body portion 561 fixed to the first electrode terminal 21 and a protruding portion 562 extending from a side (e.g., the right side) of the body portion 561.

As shown in FIG. 10, the body portion 561 of the lower insulating member 560 has a fourth thickness L4'. In addition, the body portion 561 of the lower insulating member 560 has a fifth thickness L5' at a portion where extension starts from the body portion 561 and a sixth thickness at a portion L6' where the extension ends. The thicknesses L4', L5', and L6' are measured in a direction perpendicular to the cap plate 31.

In this embodiment, the thickness L5' of the protruding portion 562 of the lower insulating member 560 is greater than the sixth thickness L6'.

In FIG. 10, the protruding portion 562 is extended to the right side (inwardly facing side) from a portion separated to an upper side from the inclined side of the corner 561d including a flat inclined side of the body portion 561.

In this embodiment, the fifth thickness L5' is greater than the sixth thickness L6'. Thus, a space between the protruding portion 562 and the electrode assembly 10 is larger than a space between the protruding portion 462 and the electrode assembly 10 of the rechargeable battery 105.

Thus, compared to the rechargeable battery 105, the space between the protruding portion 562 and the electrode assembly 10 can be larger for providing a buffer space where a portion of the electrode assembly 10 corresponding to the protruding portion 562 is deformed due to external impact and the impact can be absorbed.

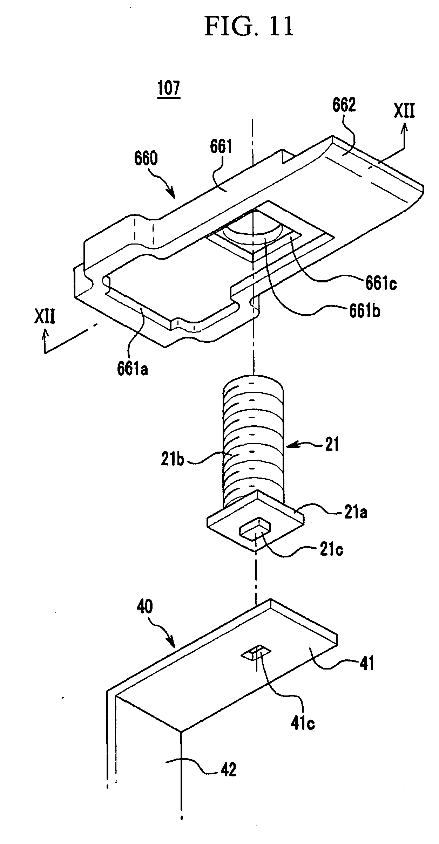

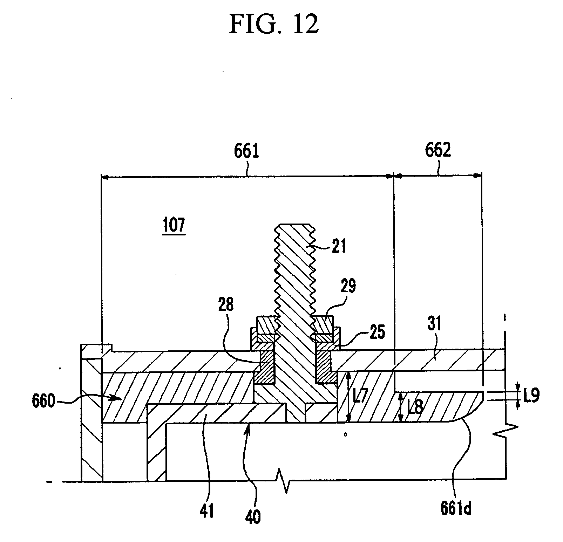

FIG. 11 is a partial exploded perspective view of a rechargeable battery according to another embodiment of the present invention, and FIG. 12 is a partial cross-sectional view, taken along the line XII-XII.

Referring to FIG. 11 and FIG. 12, a rechargeable battery 107 according to another embodiment is the same as the rechargeable battery 101 described above, except for the shape of the lower insulating member 660, and therefore a description of the same components and structures will not be repeated.

In addition, a joining groove 661 a, a terminal hole 661 b, and a flange groove 661 c included in the lower insulating member 660 are the same as the joining groove 61 a, the terminal hole 61 b, and the flange groove 61 c of the lower insulating member 60, and therefore further description thereof will not be provided. Further, the lower insulating member 660 may be the same as the lower insulating member 60 in material and size, excluding the thickness, and therefore further description thereof will not be provided.

Referring to FIG. 11 and FIG. 12, the lower insulating member 660 includes a body portion 661 fixed to the first electrode terminal 21 and a stepped portion 662 formed at one end of the body portion 661 and facing the cap plate 31.

The body portion 661 of the lower insulating member 660 has a seventh thickness L7 measured in a direction perpendicular to the cap plate 31.

In addition, the stepped portion 662 of the lower insulating member 660 has an eighth thickness L8 at an end of the stepped portion 662 that is adjacent the body portion 661 and a ninth thickness L9 at an opposite end of the stepped portion 662. The thicknesses L8 and L9 are measured in a direction perpendicular to the cap plate 31.

In this embodiment, the eighth thickness L8 of the stepped portion 662 of the lower insulating member 660 is greater than the ninth thickness L9. However, in another embodiment, the eighth thickness L8 and the ninth thickness L9 may be the same or substantially the same.

In this embodiment, the eighth thickness L8 of the stepped portion 662 is less than the seventh thickness L7 of the body portion 661, and a space is formed between the stepped portion 662 and the cap plate 31 when the lower insulating member 660 is closely attached to or abutting the cap plate 31.

In this embodiment, the lower insulating member has an inclined surface 661d.

In FIG. 12, the space between the stepped portion 662 and the cap plate 31 receives the elastic stepped portion 662 deformed by an upward pressure due to deformation of the electrode assembly 10 from a test (e.g., a drop test) for measuring durability of the rechargeable battery 107 or an increase of internal pressure.

Thus, the stepped portion 662 provides an insulating function to block a current flowing between the cap plate 31 and the electrode assembly 10 and simultaneously provides a buffer space for absorbing impact when a portion of the electrode assembly 10 corresponding to the stepped portion 662 is deformed due to external impact.

In some embodiments, the lower insulating member 660 can take the form shown in FIG. 12, without the inclined surface 661d. In such embodiments, the insulating member 660 would take on an inclined shape in contact with the electrode assembly as a result of flexion of the insulating member on contact by the electrode assembly.

As discussed above, embodiments of the invention provide a rechargeable battery comprising: an electrode assembly; a case having an opening, and arranged to containing the electrode assembly; a cap plate arranged to sealing the opening of the case; an electrode terminal electrically connected to the electrode assembly and arranged to protrudeing outside the case; and an insulating member arranged between the electrode assembly and the cap plate and adjacent the electrode terminal, the insulating member comprising an inclined portion facing the electrode assembly.

While this invention has been described in connection with what are presently considered to be some embodiments, it is to be understood that the invention is not limited to the disclosed embodiments, but, on the contrary, is intended to cover various modifications and equivalent arrangements included within the scope of the appended claims.

## Claims

1. A rechargeable battery having a quadrangular shape comprising:
an electrode assembly:
a case having an opening, and arranged to contain the electrode assembly;
a cap plate arranged to seal the opening of the case;
an electrode terminal electrically connected to the electrode assembly and arranged to protrude outside the case; and
a lower insulating member disposed under the cap plate arranged between the electrode assembly and the cap plate and adjacent the electrode terminal, the lower insulating member comprising an inclined portion facing the electrode assembly, wherein the lower insulating member has a terminal hole into which the electrode terminal is inserted.

2. A rechargeable battery according to claim 1, wherein the inclined portion of the lower insulating member comprises a rounded inclined side or a flat inclined side.

3. A rechargeable battery according to claim 2, further comprising a protecting member arranged to surround a side of the electrode assembly corresponding to the lower insulating member.

4. A rechargeable battery according to claim 3, wherein the protecting member comprises a tape.

5. A rechargeable battery according to any one of claims 1 to 4, wherein the insulating member further comprises a protruding portion extending from an end thereof.

6. A rechargeable battery according to claim 5, wherein the protruding portion extends from a body portion of the lower insulating member and has a first thickness at a first end adjacent the body portion, the first thickness being less than a thickness of the body portion.

7. A rechargeable battery according to claim 6, wherein the protruding portion has a second thickness at a second end opposite the first end, the second thickness being substantially the same as the first thickness.

8. A rechargeable battery according to claim 6, wherein the protruding portion has a second thickness at a second end opposite the first end, the second thickness being less than the first thickness.

9. A rechargeable battery according to any one of claims 1 to 4, wherein the insulating member comprises a stepped portion at an end thereof, wherein a space being formed between the cap plate and the stepped portion.

10. A rechargeable battery according to any one of claims 1 to 9, wherein the insulating member comprises an elastic material.

11. A rechargeable battery according to any one of claims 1 to 10, wherein the insulating member is coupled to the electrode terminal.

12. A rechargeable battery according to any one of claims 1 to 11, wherein the electrode terminal is electrically connected to the electrode assembly through an electrode current collecting member.

13. A rechargeable battery according to any one of claims 1 to 12, comprising a plurality of electrode assemblies.

14. A rechargeable battery according to any one of claims 1 to 13, comprising a plurality of electrode terminals, wherein each electrode terminals is adjacent a said lower insulating member.

## Patentansprüche

1. Wiederaufladbare Batterie mit einer viereckigen Form, umfassend:
eine Elektrodenanordnung;
ein Gehäuse mit einer Öffnung, und ausgestaltet, die Elektrodenanordnung zu enthalten;
eine Abdeckplatte, ausgestaltet, die Öffnung des Gehäuses zu verschließen;
eine Elektrodenklemme, die elektrisch mit der Elektrodenanordnung verbunden ist, und die ausgestaltet ist, außerhalb des Gehäuses vorzustehen; und
ein unteres Isolierelement, das unter der Abdeckplatte angeordnet ist, und das zwischen der Elektrodenanordnung und der Abdeckplatte und angrenzend an die Elektrodenklemme angeordnet ist, wobei das untere Isolierelement einen der Elektrodenanordnung zugewandten schrägen Abschnitt umfasst, wobei das untere Isolierelement ein Klemmenloch aufweist, in welches die Elektrodenklemme eingesetzt ist.

2. Wiederaufladbare Batterie nach Anspruch 1, wobei der schräge Abschnitt des unteren Isolierelements eine gerundete Schrägseite oder eine flache Schrägseite umfasst.

3. Wiederaufladbare Batterie nach Anspruch 2, ferner umfassend ein Schutzelement, dass angeordnet ist, eine Seite der Elektrodenanordnung entsprechend dem unteren Isolierelement zu umgeben.

4. Wiederaufladbare Batterie nach Anspruch 3, wobei das Schutzelement ein Band umfasst.

5. Wiederaufladbare Batterie nach einem der Ansprüche 1 bis 4, wobei das Isolierelement ferner einen vorspringenden Abschnitt umfasst, der sich von einem Ende desselben aus erstreckt.

6. Wiederaufladbare Batterie nach Anspruch 5, wobei sich der vorspringende Abschnitt von einem Körperabschnitt des unteren Isolierelements aus erstreckt und an einem ersten Ende angrenzend an den Körperabschnitt eine erste Dicke aufweist, wobei die erste Dicke geringer ist als eine Dicke des Körperabschnitts.

7. Wiederaufladbare Batterie nach Anspruch 6, wobei der vorspringende Abschnitt an einem dem ersten Ende gegenüberliegenden zweiten Ende eine zweite Dicke aufweist, wobei die zweite Dicke im Wesentlichen dieselbe ist wie die erste Dicke.

8. Wiederaufladbare Batterie nach Anspruch 6, wobei der vorspringende Abschnitt an einem dem ersten Ende gegenüberliegenden zweiten Ende eine zweite Dicke aufweist, wobei die zweite Dicke geringer ist als die erste Dicke.

9. Wiederaufladbare Batterie nach einem der Ansprüche 1 bis 4, wobei das Isolierelement an einem Ende desselben einen abgestuften Abschnitt umfasst, wobei zwischen der Abdeckplatte und dem abgestuften Abschnitt ein Zwischenraum ausgebildet ist.

10. Wiederaufladbare Batterie nach einem der Ansprüche 1 bis 9, wobei das Isolierelement ein elastisches Material umfasst.

11. Wiederaufladbare Batterie nach einem der Ansprüche 1 bis 10, wobei das Isolierelement mit der Elektrodenklemme gekoppelt ist.

12. Wiederaufladbare Batterie nach einem der Ansprüche 1 bis 11, wobei die Elektrodenklemme über ein Elektrodenstromsammelglied elektrisch mit der Elektrodenanordnung verbunden ist.

13. Wiederaufladbare Batterie nach einem der Ansprüche 1 bis 12, umfassend eine Vielzahl von Elektrodenanordnungen.

14. Wiederaufladbare Batterie nach einem der Ansprüche 1 bis 13, umfassend eine Vielzahl von Elektrodenklemmen, wobei jede Elektrodenklemme an ein derartiges unteres Isolierelement angrenzt.

## Revendications

1. Batterie rechargeable ayant une forme quadrangulaire, comprenant :
un ensemble d'électrodes ;
un boîtier ayant une ouverture, et agencé pour renfermer l'ensemble d'électrodes ;
une plaque formant capuchon agencée pour sceller l'ouverture du boîtier ;
une borne d'électrode reliée électriquement à l'ensemble d'électrodes et agencée de manière à faire saillie à l'extérieur du boîtier ; et
un élément isolant inférieur disposé sous la plaque formant capuchon, agencé entre l'ensemble d'électrodes et la plaque formant capuchon et de manière adjacente à la borne d'électrode, l'élément isolant inférieur comprenant une partie inclinée faisant face à l'ensemble d'électrodes, où l'élément isolant inférieur présente un trou de borne dans lequel la borne d'électrode est insérée.

2. Batterie rechargeable selon la revendication 1, dans laquelle la partie inclinée de l'élément isolant inférieur comprend un côté incliné arrondi ou un côté incliné plat.

3. Batterie rechargeable selon la revendication 2, comprenant en outre un élément de protection agencé pour entourer un côté de l'ensemble d'électrodes correspondant à l'élément isolant inférieur.

4. Batterie rechargeable selon la revendication 3, dans laquelle l'élément de protection comprend une bande.

5. Batterie rechargeable selon l'une quelconque des revendications 1 à 4, dans laquelle l'élément isolant comprend en outre une partie en saillie s'étendant à partir d'une extrémité de celui-ci.

6. Batterie rechargeable selon la revendication 5, dans laquelle la partie en saillie s'étend à partir d'une partie de corps de l'élément isolant inférieur et présente une première épaisseur au niveau d'une première extrémité adjacente à la partie de corps, la première épaisseur étant inférieure à une épaisseur de la partie de corps.

7. Batterie rechargeable selon la revendication 6, dans laquelle la partie en saillie présente une deuxième épaisseur au niveau d'une deuxième extrémité opposée à la première extrémité, la deuxième épaisseur étant essentiellement la même que la première épaisseur.

8. Batterie rechargeable selon la revendication 6, dans laquelle la partie en saillie présente une deuxième épaisseur au niveau d'une deuxième extrémité opposée à la première extrémité, la deuxième épaisseur étant inférieure à la première épaisseur.

9. Batterie rechargeable selon l'une quelconque des revendications 1 à 4, dans laquelle l'élément isolant comprend une partie étagée au niveau d'une extrémité de celui-ci, où un espace étant formé entre la plaque formant capuchon et la partie étagée.

10. Batterie rechargeable selon l'une quelconque des revendications 1 à 9, dans laquelle l'élément isolant comprend un matériau élastique.

11. Batterie rechargeable selon l'une quelconque des revendications 1 à 10, dans laquelle l'élément isolant est couplé à la borne d'électrode.

12. Batterie rechargeable selon l'une quelconque des revendications 1 à 11, dans laquelle la borne d'électrode est reliée électriquement à l'ensemble d'électrodes par l'intermédiaire d'un élément de collecte de courant d'électrode.

13. Batterie rechargeable selon l'une quelconque des revendications 1 à 12, comprenant une pluralité d'ensembles d'électrodes.

14. Batterie rechargeable selon l'une quelconque des revendications 1 à 13, comprenant une pluralité de bornes d'électrode, où chacune des bornes d'électrode est adjacente audit élément isolant inférieur.
